# EUROPÄISCHE PATENTSCHRIFT

(11) **EP 1 709 933 B1**
(45) Veröffentlichungstag und Bekanntmachung des Hinweises auf die Patenterteilung: **24.10.2012**
(21) Anmeldenummer: 06006455.7
(22) Anmeldetag: 28.03.2006
(51) Int. Cl.: A61C 1/18

(54) **Medizinisches Handstück mit einem abgewinkelten Schaft**
Medical handpiece with a shaft forming an angle
Pièce à main médicale avec axe formant un angle

(30) Priorität: 07.04.2005 DE 102005016049
(43) Veröffentlichungstag der Anmeldung: 11.10.2006
(73) Patentinhaber: Kaltenbach & Voigt GmbH, 88400 Biberach (DE)
(72) Erfinder: Kuhn, Bernhard, 88400 Biberach (DE); Claßen, Thomas, 88518 Herbertingen (DE)
(74) Vertreter: Schmidt-Evers, Jürgen

(56) Entgegenhaltungen:
- EP-A- 1 402 841
- DE-B- 1 100 876
- DE-U1- 8 217 760
- US-A- 2 025 779
- US-A- 2 923 060
- US-A- 3 936 940
- US-A1- 2004 166 473

## Beschreibung

Die Erfindung betrifft ein medizinisches Handstück nach dem Oberbegriff des Anspruchs 1.

Bei einem vorliegenden sogenannten Winkelhandstück ist es bekannt, zur Vereinfachung der Antriebswelle, insbesondere des vorderen Wellenabschnitts, den Schaft des Handstücks quer zu teilen und die geteilten Abschnitte miteinander zu verbinden. Die DE 32 27 417 A1 zeigt ein dentalmedizinisches Winkelhandstück mit einem Schaft, der im Bereich der Schaftabwinklung quer geteilt ist. Dagegen zeigt die DE 44 17 810 C2 ein Winkelhandstück, dessen Schaft hinter dem Arbeitskopf quer geteilt ist, wobei der Schaft im Bereich der Abwinklung einteilig ausgebildet ist. Diese Teilungen ermöglichen die Zugänglichkeit insbesondere zum vorderen Schaftabschnitt von vorne (DE 44 17 810 C2) oder von hinten (DE 32 27 417 A1) bezüglich sowohl Herstellungsmaßnahmen als auch Montagemaßnahmen. Bei dem Handstück der DE 44 17 810 C2 erstreckt sich ferner im hinteren Endbereich des Handstücks eine dessen Umfangswand nach außen durchsetzende Zuführleitung für ein Medium nach außen zu einem Schlauchanschluß.

Dabei ist zu berücksichtigen, daß es nicht nur des Einschiebens der zu montierenden Handstückteile, insbesondere des vorderen Wellenabschnitts, bedarf, sondern auch einer axialen Fixierung, um eine gute Lagerung und lange Lebensdauer zu erreichen.

Das vorbeschriebene Problem stellt sich bei sogenannten Turbinenhandstücken mit einem Turbinenantrieb im Bereich des Arbeitskopfes nicht, weil bei einem Turbinenhandstück die Herstellung und Montage einer Konstruktion zur Wellenlagerung entfällt und lediglich längs verlaufende Kanäle zur Zuführung und Abführung von Druckluft zur Turbine vorzusehen sind. Deshalb ist bei einem Turbinenhandstück die einteilige Ausbildung des Schaftes im Bereich der Abwinklung oder im Bereich zwischen dem vorderen Schaftabschnitt und dem Arbeitskopf unproblematisch.

Es zeigt zwar die Fig. 5 der DE 102 08 692 A1 ein medizinisches Handstück, dessen Schaft und Arbeitskopf einteilig dargestellt sind, jedoch handelt es sich hierbei um eine vereinfachte Darstellung ohne Angabe erforderlicher Konstruktionselemente zur Lagerung und Montage der Antriebswelle, insbesondere des vorderen Wellenabschnitts. In Wirklichkeit bedarf es auch bei diesem Winkelhandstück wenigstens einer Querteilung, um die Herstellung und Montage zu gewährleisten.

Aus der DE 82 17 760 U 1 ist ein Eindrehinstrument zum Eindrehen von Zahnimplantaten bekannt, bei dem in einem vorderen Schaftabschnitt ein Antriebswellenabschnitt mittels einer Lagerbuchse drehbar angeordnet ist. Die Lagerbuchse ist von einem Sicherungsstift gehalten. Das aus dieses Druchschrift bekannte Handstüch offenbart die Merkmale des Oberbegriffs von Anspruch 1.

Aus der US 2,025,779 ist ein dentales Handstüc k bekannt, bei dem in einem Schaftabschnitt, der mit einem Kopfbereich verschraubt ist, ein Wellenabschnitt drehbar gelagert ist.

Aus der US 2,923,060 ist ein dentales Handstück bekannt, bei dem zwei Schaftabschnitte einen stumpfen Winkel einschließen, wobei im Übergan gsbereich der beiden Schaftabschnitte zwei Wellenabschnitte in Zahnradverbindung miteinander stehen.

Der Erfindung liegt die Aufgabe zugrunde, bei einem Handstück der eingangs angegebenen Art die Montierbarkeit zu verbessern. Im weiteren wird auch eine einfache, kostengünstig e und kleine Konstruktion angestrebt.

Diese Aufgabe wird durch die Merkmale des unabhängigen Anspruchs 1 gelöst. Vorteilhafte Weiterbildungen der Erfindung sind in den zugehörigen Unteransprüchen beschrieben.

Den erfindungsgemäßen Ausgestaltungen liegt die Erkenntnis zugrunde, daß eine Montage der Aufnahmehülse von hinten in den vorderen Schaftabschnitt günst ig ist und sich dabei auch eine axiale Fixierung der Aufnahmehülse verwirklichen läßt.

Beim erfindungsgemäßen Handstück nach Anspruch 1 ist die Aufnahmehülse von hinten in den vorderen Schaftabschnitt einschraubbar. Hierdurch ist nicht nur eine einfache Montage von hinten, sondern auch eine sichere axiale Positionierung der Aufnahmehülse möglich, weil durch das Einschrauben nicht nur die axiale Positionierung der Aufnahmehülse gewährleistet ist, sondern auch deren Hinführung in ihre axiale Endposition, in die sie beim Einschrauben selbsttätig gelangt. An der Aufnahmehülse sind am hinteren Ende und von hinten zugänglich Drehangriffselemente angeordnet. Hierdurch ist ein Ein- und Ausschrauben der Aufnahmehülse erleichtert.

Vorzugsweise ist der vordere Wellenabschnitt so in dem Schaft angeordnet, daß sein hinteres Ende näher an der durch die Abwinklung der beiden Schaftabschnitte gebildeten konkaven Rückenseite des Schaftes liegt, als an der konvexen Bauchseite derselben. Hierdurch ergibt sich eine Position des vorderen Wellenabschnitts im vorderen Schaftabschnitt, die bezüglich der Längsmittelachse des vorderen Schaftabschnitts zur konkaven Rückenseite des Schaftes hin winkelversetzt ist und deshalb für den vorderen Wellenabschnitt eine günstige Einbauposition bezüglich dem ebenfalls zur konkaven Rückenseite hin ab gewinkelten hinteren Schaftabschnitt ergibt. Der im vorderen Schaftabschnitt zur Verfügung stehende Konstr uktionsraum kann somit bezüglich einer für die Montage des vorderen Wellenabschnitts günstige Position besser ausgenutzt werden.

Vorzugsweise sind die relevanten Konstruktionsparameter des Handstücks so gewählt, daß die Aufnahmehülse durch die Öffnung am Ende des hinteren Schaftabschnitts in den vorderen Schaftabschnitt mittels einer linearen Bewegung einschiebbar und dort verankerbar ist. Auch bei dieser erfindungsgemäß en Ausgestaltung ist die Aufnahmehülse von hin ten montierbar bzw. demontierbar, und zwar durch eine lineare Einschub- bzw. Auszugsbewegung. Dabei befindet sich der Lochrand der Öffnung am hinteren Schaftabschnitt an der konvexen Bauchseite des Schaftes in einer Position, in der er einen radialen Abstand von der Längsmittelachse des Aufnahmeloches im vorderen Schaftabschnitt aufweist und dieser radiale Abstand wenigstens dem größten Radialmaß der Aufnahmehülse entspricht, so daß diese bei ihrer lineare n Bewegung am Öffnungsrand vorbei bewegbar ist.

Schließlich ist zur verbesserten Anordnung einer Medienleitung vorzugsweise vorgesehen, daß auf dem hinteren Endbereich der Umfangswand des Handstück s ein Schafthülsenabschni tt angeordnet ist, daß auf einem Teil der Länge des Schafthülsenabschnit ts zwischen ihm und der Umfangswand ein Ringfreiraum angeordnet ist, daß eine Zuführleitung für ein Medium als Kanal durchsetzt und daß der Schlauchanschluß am Schafthülsenabschnitt angeordnet ist.

Nachfolgend werden vorteilhafte Ausgestaltungen der Erfindung anhand von bevorzugten Ausführungsbeispielen und Zeichnungen näher erläutert. Es zeigt
- Fig. 1: ein erfindungsgemäßes medizinisches, insbesondere dentalmedizinisches, Handstück im vertikale n Längsschnitt;
- Fig. 2: das Handstück nach Fig. 1 in einem anderen Montagezustand;
- Fig. 3: den vorderen Endabschnitt eines Montagewerkzeugs im axialen Schnitt;
- Fig. 4: den Teilschnitt IV-IV in Fig. 2;
- Fig. 5: eine vordere Aufnahmehülse mit einem darin drehbar gelagerten vorderen Wellenabschnitt als Baueinheit im axialen Schnitt.

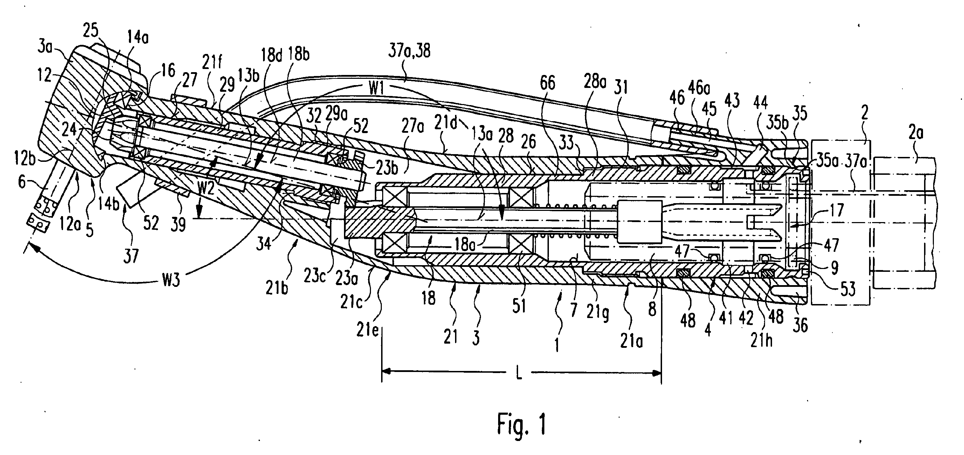

Das in Fig. 1 in seiner Gesamtheit mit 1 bezeichnete Behandlungsinstrument besteht aus einem hinteren Instrumententeil, nämlich einem sog. Anschlußtei 1 2, und einem vorderen Instrumententeil, nämlich einem sog. Handstück 3, die durch eine Steckkupplung 4, insbesondere eine Steck/Drehkupplung, lösbar miteinander verbunden sind. Im vorderen Endbereich des Handstücks 3 ist eine vorzugsweise lösbare Haltevorrichtung 5 für ein Werkzeug 6 angeordnet, die das Werkzeug 6 in einer seitlich abstehenden Position hält. Die Haltevorrichtung 5 bildet einen Werkzeughalter.

Die Steck/Drehkupplung wird durch eine im Querschnitt runde Kupplungsausnehmung 7 und einen darin mit geringem Bewegungsspiel einsteckbaren Kupplungszapfen 8 gebildet. Beim vorliegenden Ausführungsbeispiel ist die Kupplungsausnehmung 7 am hinteren Ende des Handstücks 3 angeordnet, und der im wesentlichen zylindrische oder stufenzylindrische Kupplungszapfen 8 erstreckt sich vom Anschlußteil 2 nach vorne. Im gekuppelten Zustand sind die Kupplungsausnehmung 7 und der Kupplungszapfen 8 durch eine Verrastungsvorrichtung mit einem andeutungsweise dargestellten Verrastungselement 9 lösbar miteinander verrastet, das in dem einen Kupplungsteil radial beweglich gelagert und durch eine Federkraft in eine die Teilungsfuge zwischen den Kupplungsteilen durchsetzende Verrastungsstellung vorgespannt ist, in der das Verrastungselement 9 in eine Ringnut im anderen Kupplungsteil einfasst. Eine solche an sich bekannte Verrastungsvorrichtung ist durch eine manuelle Zugkraftausübung zum Trennen der Kupplungsteile überdrückbar, wobei das Verrastungselement 9 selbsttätig in seine Freigabestellung verdrängt wird. Das Verrastungselement 9 ist z. B. ein radial elastisch zusammendrückbarer Federring, der in einer Außenringnut im Kupplungszapfen sitzt und in eine Innenringnut in die Kupplungsausnehmung hineinragt.

Das Anschlußteil 2 ist in nicht dargestellter Weise mit einer flexiblen Versorgungsleitung 2a verbindbar oder verbunden, die mit einem Steuergerät verbunden ist. Das Handstück 3 ist beim Vorhandensein der Steck/Drehkupplung um 360° frei drehbar am Anschlußteil 2 gelagert, wodurch die Handhabbarkeit des Handstücks 3 verbessert wird.

Die Haltevorrichtung 5 weist eine Aufnahmehülse 12 zur Aufnahme des Werkzeugs 6 auf, die am werkzeugseitigen Ende eine von der Werkzeugseite her zugängliche Einstecköffnung 12a für das Werkzeug 6 bzw. dessen Halteelement hat. Die Aufnahmehülse 12 ist in einer sich quer, z.B. recht- oder stumpftwinklig, zur Längsmittelachse 13a, 13b des Handstücks 3 erstreckenden Position in einer entsprechenden Lageranordnung im vorderen Endbereich des Handstücks 3 bewegbar, z. B. drehbar, gelagert. Zur Lagerung sind zwei Drehlager 14a, 14b, z.B. Wälzlager, zwischen endseitigen Lagerzapfen der Aufnahmehülse 12 und der Innenumfangswand einer Lagerbohrung 16 angeordnet.

Die Aufnahmehülse 12 bzw. die Haltevorrichtung 5 läßt sich durch einen Antrieb 17 mit einem nicht dargestellten Antriebsmotor bewegen, der im oder außerhalb des Handstücks 3 angeordnet sein kann, z.B. im Anschlußteil 2. Beim Ausführungsbeispiel erstreckt sich längs durch das Handstück 3 bzw. Instrument 1 eine Antriebswelle 18, die mit der Aufnahmehülse 12 bzw. der Haltevorrichtung 5 in Antriebsverbindung steht.

Das Handstück 3 weist einen länglichen Schaft 21 auf, an dessen vorderem Ende ein Handstückkopf angeordnet ist, in dem die Aufnahmehülse 12 drehbar gelagert ist. Der Schaft 21 besteht aus einem hinteren Schaftabschnitt 21a und einem vorderen Schaftabschnitt 21b, die einen stumpfen Winkel W1 miteinander einschließen, der etwa 155 bis 170°, vorzugsweise etwa 160 bis 165° beträgt. Der vordere Schaftabschnitt 21b ist somit bezüglich der Längsachse 13a des hinteren Schaftabschnittes 21a um einen spitzen Winkel W2 von etwa 10 bis 30°, insbesondere etwa 15 bis 20°, zur der Einstecköffnung 12a abgewandten Seite hin winkelversetzt. Hierdurch erhält der Schaft 21 an der Seite, an der sich die Einstecköffnung 12a befindet, eine konvexe Bauchseite 21c und gegenüberliegend eine konkave Rückenseite 21d. Der Abwinklungs- oder Krümmungsscheitel ist mit 21 e bezeichnet. Der vordere Schaftabschnitt 21b erstreckt sich nach vorne konvergent zu einem verdickten Arbeitskopf 3a des Handstücks 3.

Die Längsachse 12b bzw. Drehachse der Aufnahmehülse 12 schließt mit der Längsmittelachse 13b des vorderen Schaftabschnitts 21b einen Winkel W3 ein, der 90° betragen kann, z. B. größer als 90° ist, vorzugsweise etwa 95 bis 115°, insbesondere etwa 105° oder etwa 90 bis 105°, beträgt. Diese Winkelgrößen ergeben bei Gewährleistung einer vorteilhaften Griffstellung der das Handstück 3 ergreifenden Bedienungshand eine raumgünstige Form bezüglich einer Behandlungsstelle, insbesondere im Mundraum eines Patienten.

Die Antriebswelle 18 besteht aus einem sich im hinteren Schaftabschnitt 21 a und darin drehbar gelagerten hinteren Wellenabschnitt 18a und einem sich im vorderen Schaftabschnitt 21b erstreckenden und darin drehbar gelagerten vorderen Wellenabschnitt 18b, die im Bereich des Scheitels 21e in Drehverbindung miteinander stehen. Beim Ausführungsbeispiel dient hierzu ein Rädergetriebe mit einem auf dem vorderen Ende des hinteren Antriebswellenabschnitts 18a angeordneten Ritzel 23a und einem am hinteren Ende des vorderen Wellenabschnitts 18b angeordneten Ritzels 23b. Dabei ist der vordere Wellenabschnitt 18b bezüglich der Längsmittelachse 13b des vorderen Schaftabschnitts 21b und auch bezüglich dem vorderen Ende des hinteren Wellenabschnitts 18a zur konkaven Rückenseite 21d hin versetzt, so daß auch das Ritzel 23b am hinteren Ende des vorderen Wellenabschnitts 18b bezüglich dem Ritzel 23b am vorderen Ende des hinteren Wellenabschnitts 18a zur konkaven Rückenseite 21 d hin versetzt ist. Vorzugsweise ist die Drehachse 18d des vorderen Wellenabschnitts 18a bezüglich der Längsmittelachse 13b des vorderen Schaftabschnitts 21b zur konkaven Rückenseite 21d so weit winkelversetzt, daß die Drehachse 18d sich parallel zur Längsmantellinie 21 f des vorderen Schaftabschnitts 21b an der konkaven Rückenseite 21d erstreckt.

Am vorderen Ende des vorderen Wellenabschnitts 18b ist ein Ritzel 24 angeordnet, das mit einem auf der Aufnahmehülse 12 angeordneten und vorzugsweise daran einteilig angeformten Ritzel 25 kämmt, das vorzugsweise mit dem Ritzel 24 auf dessen der Einstecköffnung 12a abgewandten Seite kämmt, auf der wegen des Winkels W3 sich ein raumgünstiges Rädergetriebe verwirklichen läßt.

Zur Aufnahme und Lagerung der Wellenabschnitte 18a, 18b im hinteren und vorderen Schaftabschnitt 21a, 21b dienen darin angeordnete Aufnahmelöcher 26, 27, in denen die Wellenabschnitte 18a, 18b vorzugsweise mittels Aufnahmehülsen 28, 29 drehbar gelagert sind, die jeweils von hinten in das zugehörige Aufnahmeloch 26, 27 eingeschoben und axial fixiert sind. Letzteres ist jeweils vorzugsweise eine Schraubverbindung 31, 32, von denen sich die der hinteren Aufnahmehülse 28 in deren mittlerem Bereich befindet und die der vorderen Aufnahmehülse 29 in deren hinteren Endbereich befindet. Beide Schraubverbindungen 31, 32 weisen jeweils ein Außengewinde auf der zugehörigen Hülse und ein Innengewinde im zugehörigen Schaftabschnitt auf. Vorzugsweise sind Schraubverbindungen 31, 32 jeweils im Bereich einer Verdickung 28a, 29a der zugehörigen Hülse und in einer Querschnittserweiterung im zugehörigen Schaftabschnitt angeordnet. Hierdurch ergibt sich für jede Schraubverbindung 31, 32 in einem von ihr nach vorne gerichteten Abstand ein Schulterflächenanschlag 33, 34 für die zugehörige Aufnahmehülse 28, 29, wodurch diese im festgeschraubten Zustand axial genau positioniert und auch gegen ein Lösen fixiert ist. Der hintere Schaftabschnitt 21 a besteht aus zwei Längsabschnitten, nämlich einem sich vom Scheitel 21e nach hinten nur über einen Teil der hinteren Aufnahmehülse 28 erstreckenden Schafthülsenabschnitt 21g und einem dahinter angeordneten Schafthülsenabschnitt 21h, der sich bis zum hinteren Ende des Schaftes 21 erstreckt und rückseitig mit der sich ebenfalls bis zum hinteren Ende erstreckenden Aufnahmehülse 28 abschließt. Der vordere Aufnahmehülsenabschnitt 21g ist somit kürzer als der hintere Schaftabschnitt 21a. Der hintere Schafthülsenabschnitt 21h sitzt somit auf dem hinteren Endbereich der Aufnahmehülse 28, und er ist von hinten darauf aufschiebbar und durch eine Fixiervorrichtung gegen eine Rückbewegung fixiert.

Beim Ausführungsbeispiel ist die zugehörige Fixiervorrichtung durch eine Rastvorrichtung 35 mit einer Rastausnehmung an dem einen Bauteil und einem darin einrastbaren Rastvorsprung am anderen Bauteil gebildet. Die Rastausnehmung kann durch eine Ringnut 35a in der Mantelfläche der Aufnahmehülse 28 und der Rastvorsprung durch einen Ringwulst 35b auf der Innenmantelfläche des hinteren Schafthülsenabschnitt 21h gebildet sein. Die Rastvorrichtung 35 ist durch eine axiale Kraftwirkung beim Aufschieben bzw. Abschieben des hinteren Schafthülsenabschnitt 21h überdrückbar, d. h., der Rastvorsprung leistet beim axialen Bewegen einen gewissen Widerstand, der jedoch durch die axiale Kraftwirkung überwunden wird und zwar sowohl beim Einrasten in die Rastausnehmung 35a als auch beim Ausrasten. Die Rastausnehmung 35 ist vorzugsweise in einem kurzen Abstand vom hinteren Ende des Schafthülsenabschnitts 21h und der Aufnahmehülse 28 angeordnet. Im Schafthülsenabschnitt 21h ist eine die Rastvorrichtung 35 umgebende Ringnut 36 angeordnet, die nach hinten ausmündet und die Flexibilität der Rastvorrichtung 35 verbessern kann.

Der hintere Schafthülsenabschnitt 21h besteht vorzugsweise aus Kunststoff, wodurch die Flexibilität verbessert wird und auch der Rastvorrichtung 35 zugute kommt. Der Schafthülsenabschnitt 21h ist wenigstens in seinem hinteren Endbereich dicker bemessen als der hintere Schaftabschnitt 21a, und er verjüngt sich nach vorne auf eine Hülsendicke, die dem vorderen Schafthülsenabschnitt 21d entspricht, so daß diese beiden Teile mit ihren Außenmantelflächen an der Teilungsfuge ineinander übergehen.

Dem Handstück ist eine in ihrer Gesamtheit mit 37 bezeichnete Zuführungseinrichtung für ein gasförmiges oder flüssiges Medium, wie z. B. Luft, Wasser oder ein Luft/Wasser-Gemisch zugeordnet, mit einer Zuführungsleitung 37a, die sich längs durch die Versorgungsleitung 2a, das Anschlußteil 2 und durch die Kupplung 4 bis in den vorderen Endbereich des Handstücks 3 erstreckt und auf die Behandlungsstelle gerichtet ist. Beim Ausführungsbeispiel verläuft die Zuführungsleitung 37a mit Ausnahme des hinteren Handstückbereichs außerhalb des Handstücks 3, und sie ist in diesem externen Bereich durch einen Schlauch 38 gebildet, der sich von einem Schlauchanschluß 46 im hinteren Endbereich des Handstücks 3 in den vorderen Endbereich erstreckt, und im vorderen Bereich mit einem C-förmigen Clips 39 verbunden ist, der quer auf den vorderen Schaftabschnitt 21b aufgeclipst ist.

Zu diesem Schlauchanschluß 46 erstreckt sich die Zuführungsleitung 37a zunächst axial im Anschlußteil 2 und im Kupplungszapfen 8, in dessen Bereich sie radial ausmündet, und zwar in eine zwischen dem Kupplungszapfen 8 und der Aufnahmehülse 28 angeordnete Ringnut 41, die vorzugsweise in der Innenmantelfläche der Aufnahmehülse 28 angeordnet ist. Von der Ringnut 41 erstreckt sich die Zuführungsleitung 37a in Form eines oder mehrerer auf dem Umfang verteilt angeordneter Löcher 42 in eine Ringnut 43 zwischen der Aufnahmehülse 28 und dem hinteren Schafthülsenabschnitt 21h, wobei die Ringnut 43 vorzugsweise in der Mantelfläche der Aufnahmenhülse 28 angeordnet ist. Von der Ringnut 43 erstreckt sich ein Loch 44 im hinteren Schafthülsenabschnitt 21h nach außen, von dem sich ein Kanal 45 zum Schlauchanschluß 46 hin erstreckt, der beim Ausführungsbeispiel durch eine vorzugsweise einteilig an dem Schafthülsenabschnitt 21h angeformte und sich z.B. axial oder schräg nach vorne erstreckende Schlauchtülle 46a gebildet ist, auf die der Schlauch 38 aufgesteckt und somit verbunden ist. Der Kanal 44 erstreckt sich vorzugsweise so schräg, daß er vom vorderen Ende des Schafthülsenabschnitts 21h her (dargestellt) oder vom hinteren Ende her (nicht dargestellt) eingebohrt werden kann.

Zur Abdichtung der Ringnuten 41, 43 sind zwischen dem Kupplungszapfen 8 und der Aufnahmehülse 28 sowie zwischen dieser und dem Schafthülsenabschnitt 21h Ringdichtungen angeordnet. Diese können durch in Ringnuten angeordnete O-Ringe 47, 48 gebildet sein. Bei den Ringnuten kann es sich um Innenringnuten im Schafthülsenabschnitt 21h oder in der Aufnahmehülse 28 (nicht dargestellt) oder um Außenringnuten in der Aufnahmehülse 28 und im Kupplungszapfen 8 handeln, wie es dargestellt ist.

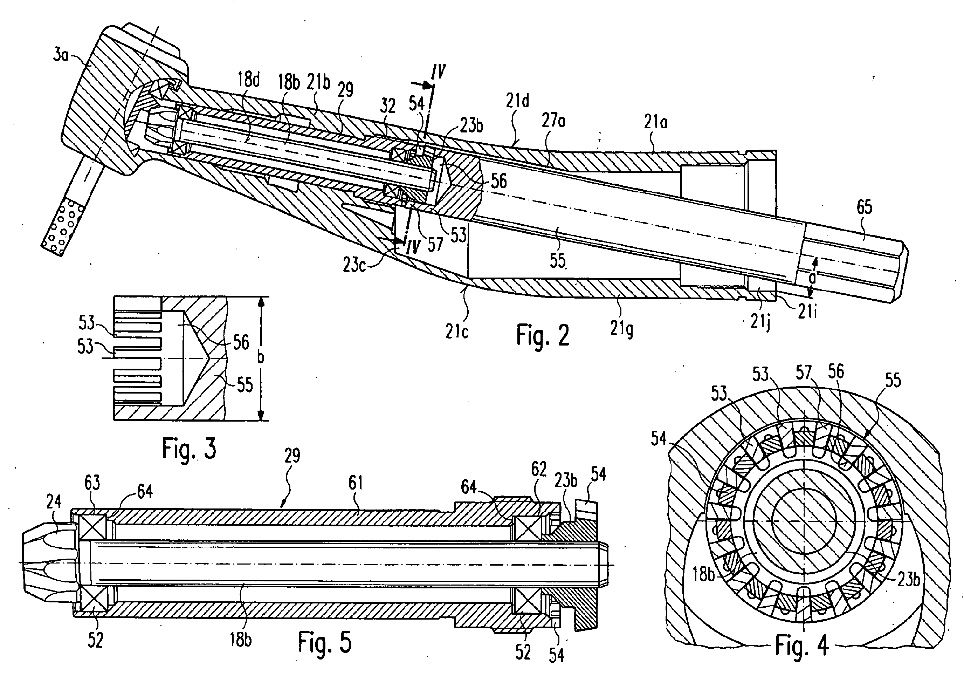

Die Aufnahmehülsen 28, 29 bilden jeweils mit den darin drehbar gelagerten Wellenabschnitten und jeweils zwei in einem axialen Abstand voneinander angeordneten Wälzlagern und den zugehörigen Zahnrädern eine vorfertigbare Hülsenbaueinheit, die sich für die Erstmontage oder auch bei einem Austausch einfach und schnell montieren bzw. austauschen lassen. Zum Ein- bzw. Ausschrauben sind an beiden Aufnahmehülsen 28, 29 jeweils am hinteren Ende und von hinten zugänglich Drehangriffselemente 53, 54 angeordnet, mit denen jeweils ein Drehwerkzeug 55 formschlüssig verbindbar ist. Fig. 2 zeigt ein stiftförmiges Drehwerkzeug 55, das an seinem vorderen Ende hülsenförmig mit einem in der Hülsenform angeordneten Hohlraum 56 ausgebildet ist. Mit dieser Hülsenform ist das Drehwerkzeug 55 geeignet, das Ritzel 23b zu übergreifen und an den rückseitigen Drehangriffselementen 54 an der Aufnahmehülse 29 anzugreifen. Die Drehangriffselemente 54 sind vorzugsweise durch Zähne und dazwischen angeordneten Zahnlücken gebildet, die auf dem gesamten Umfang der Aufnahmehülse 29 verteilt und von hinten axial zugänglich sind.

Wenn das Ritzel 23b so groß ist, daß es die Zugänglichkeit der Drehangriffselemente 54 von hinten verdeckt, ist es mit Zähnen und Zahnlücken in gleicher Anzahl wie die Zähne und Zahnlücken des Ritzels 23b auszubilden. Bei einer solchen Ausgestaltung können die Zähne 57 des Drehwerkzeugs 55 durch die Zahnlücken des Ritzels 23b hindurch in die Zahnlücken der Drehangriffselemente 54 gesetzt und somit formschlüssig mit diesen verbunden werden: Diese Ausgestaltung ermöglichst es, bei den beengten Raumverhältnissen eines dentalmediznischen Handstücks 3 trotz einer verhältnismäßig großen Ausgestaltung des Ritzels 23b die Zugänglichkeit zu den Drehangriffselementen 54 der Aufnahmehülse 29 zu gewährleisten.

Die als eigenständige Baueinheit vorgefertigte vordere Aufnahmehülse 29 besteht aus einem Hülsenkörper 61, dem Wellenabschnitt 18b mit den darauf endseitig angeordneten Ritzeln 24, 54 und zwei Drehlagern 52, insbesondere Wälzlagern, die in den beiden Endbereichen des Wellenabschnitts 18b darauf sitzen und in endseitigen Lagerbohrungen 62, 63 jeweils vom zugehörigen Hülsenkörperende her eingesetzt sind und dabei mit ihren Außenringen innenseitig an einer Schulterfläche 64 der Lagerbohrungen 62, 63 anliegen, wobei die Ritzel 24, 54 an den Außenseiten der Innenringe der Drehlager 52 anliegen. Durch diese Ausbildung sind die vorbeschriebenen Teile der Aufnahmehülse 29 unter Berücksichtigung eines erforderlichen Bewegungsspiel axial und radial bestimmt. Die Aufnahmehülse 29 bildet somit eine vormontierte Baueinheit, die wahlweise in den vorderen Schaftabschnitt 21b von hinten einsteckbar und einschraubbar und gegen den Schulterflächenanschlag 34 axial festlegbar ist. Das Einschrauben von hinten ist möglich, weil im hinteren Schaftabschnitt 21 a soviel Freiraum vorhanden ist, daß die Aufnahmehülse 29 wie vorbeschrieben montierbar ist.

Beim vorliegenden Ausführungsbeispiel weist der hintere Rand 21 i der Öffnung 21j des Aufnahmehülsenabschnitts 21 g einen Abstand a von einer gedachten Verlängerung der Dreh- und Längsmittelachse 18d des vorderen Wellenabschnitts 18b auf, der so groß ist, daß die Aufnahmehülse 29 bei einer koaxialen Bewegung von hinten einführbar und einschraubbar und wieder entfernbar ist. In der Anschlagposition stehen die Ritzel 24, 25 zwischen dem vorderen Wellenabschnitt 18b und der Aufnahmehülse 12 in Eingriff.

Zum Fest- und Losschrauben der Aufnahmehülse 29 dienen die Drehangriffselemente 54 am hinteren Ende des Hülsenkörpers 61, die mit dem stangenförmigen Drehwerkzeug 55 von hinten zugänglich sind, daß an seinem hinteren Ende ebenfalls ein Drehangriffsmittel 65, z. B. einen Sechskant, aufweist und so lang bemessen ist, daß es von hinten zugänglich ist. Beim Ausführungsbeispiel überragt das Drehwerkzeug 55 den hinteren Rand 21i mit dem Drehangriffsmittel 65. Das Drehwerkzeug 55 weist etwa die gleiche Querschnittsgröße auf wie die Aufnahmehülse 29, insbesondere im Bereich deren Verdickung 29a. Deshalb kann auch das Drehwerkzeug 55 bei einer bezüglich der Drehachse 18d koaxialen Anordnung und linearer Zuführungsbewegung zum Drehangriffselement 54 in Arbeitsposition bewegt und funktionsgerecht gedreht werden.

Die Querschnittsabmessung b des Drehwerkzeugs 55 in seinem vorderen Endbereich ist beim vorliegenden Ausführungsbeispiel, bei dem das Ritzel 23b die Stirnseite des Hülsenkörpers 61 von hinten überdeckt, an den Außendurchmesser des Ritzels 23b angepaßt. Die Drehangriffselemente 53 am Drehwerkzeug 55 sind durch von dessen Stirnseite nach vorne abstehende Zähne gebildet, die an die Größe der Zahnlücken des Ritzels 23b so angepaßt sind, daß sie durch die Lücken hindurchsteckbar sind und bis zwischen die Drehangriffselemente 54 am hinteren Ende des Hülsenkörpers 61 reichen, die vorzugsweise nach hinten abstehende Zähne gebildet sind, die ebenfalls so ausgebildet sind, daß die Zähne des Drehwerkzeugs 55 zwischen die Zähne des Hülsenkörpers 61 steckbar sind. Durch das Aufstecken wird das Ritzel 23b im Hohlraum 56 des Drehwerkzeugs 55 aufgenommen, wodurch das Drehwerkzeug 55 eine Führung erhält, die das Druckwerkzeug 55 quer positioniert und ein Abrutschen vom Zahneingriff verhindert.

Die nur in Fig. 1 dargestellte hintere Aufnahmehülse 28 ist ebenfalls durch einen Hülsenkörper 66 gebildet, der von hinten in das Aufnahmeloch 26 des hinteren Schaftabschnitts 21a einsteckbar ist und in sich den hinteren Wellenabschnitt 18a in zwei Drehlagern 51 lagert, die einen axialen Abstand voneinander aufweisen und in der vorderen Hälfte des Hülsenkörpers 66 angeordnet sind. Der hintere Wellenabschnitt 18a mit dem an seinem vorderen Ende angeordneten Ritzel 23a ist mit den Wälzlagern 51 von hinten in den Hülsenkörper 66 eingeschoben und axial fixiert. In der gegen den Schulterflächenanschlag 33 geschraubten und somit axial fixierten Position der Aufnahmehülse 28 befindet sich das Ritzel 23a bezüglich des Ritzels 23b in seiner richtigen axialen Kämmposition. Für das Ein- und Ausschrauben der Aufnahmehülse 28 sind an deren hinterem Ende Drehangriffselemente 53 vorgesehen, die für ein nicht dargestelltes Drehwerkzeug zugänglich sind und z. B. durch nach hinten ausmündende Löcher gebildet sind.

Der hintere Schulterflächenanschlag 33 für die hintere Aufnahmehülse 28 im hinteren Schaftabschnitt 21a und der vordere Schulterflächenanschlag 34 für die vordere Aufnahmehülse 29 im vorderen Schaftabschnitt 21d befinden sich in Längspositionen im Schaft 21, in denen die vormontierten Aufnahmehülsen 28, 29 so angeordnet sind, daß das hintere Ritzelpaar 23a, 23b und das vordere Ritzelpaar 24, 25 sich in den richtigen Kämmpositionen befinden. Ein axiales Ausrichten der Aufnahmehülsen 28, 29 ist deshalb nicht erforderlich.

Zusätzlich zu den vorbeschriebenen Konstruktionsparametern, die das Einführen und Ein- bzw. Ausschrauben der vorderen Aufnahmehülse 29 von hinten gewährleisten, werden noch folgende Konstruktionsparameter beschrieben, die diese Zugänglichkeit von hinten weiter verbessern.

Der vordere Wellenabschnitt 18b ist so in dem vorderen Schaftabschnitt 21 b angeordnet, daß das hintere Ende des vorderen Wellenabschnitts 18b näher am durch die Abwinklung der beiden Schaftabschnitt 21a, 21 gebildeten konkaven Rückenseite 21 d des Schaftes 21 liegt als an der konvexen Bauchseite 21c. Das hintere Ende des vorderen Wellenabschnitts 18d bzw. der vorderen Aufnahmehülse 29 ist somit bezüglich an sich bekannten Ausgestaltungen, bei denen die Mittel- bzw. Drehachse 18d des Wellenabschnitts 18b koaxial zur Längsmittelachse 13b des vorderen Schaftabschnitts 21b angeordnet ist, zur Rückenseite 21d hin winkelversetzt. Durch diesen Winkelversatz wird die Zugänglichkeit von hinten verbessert, weil die Position des hinteren Endes des vorderen Wellenabschnitts 18d bzw. der vorderen Aufnahmehülse 29 bezüglich des hinteren Randes des Aufnahmeloches 26 im hinteren Schaftabschnitt 21 a günstiger ist.

Es ist somit möglich, den hinteren Rand des Aufnahmelochs 26 an der Bauchseite 21 c durch entsprechende Querschnittsbemessungen der vorderen Aufnahmehülse 29 des Aufnahmeloches 26 und des axialen Abstands des hinteren Randes des Aufnahmeloches 26 den hinteren Rand des Aufnahmeloches 26 an der Bauchseite 21c so zu positionieren, daß der Lochrand den Abstand a zur Verlängerung der Längsmittelachse der vorderen Aufnahmehülse 29 aufweist, der gleich oder größer ist als die halbe Querschnittsabmessung der Aufnahmehülse 29 und/oder des Drehwerkzeugs 59, so daß diese Teile bei bezüglich der Längsmittelachse der Aufnahmehülse 29 koaxialer Bewegung montiert bzw. demontiert oder bezüglich des Drehwerkzeugs 59 in Arbeitsstellung gebracht und wieder entfernt werden können.

Die Drehachse 18d bzw. die Längsmittelachse des vorderen Wellenabschnitts 18b bzw. der vorderen Aufnahmehülse 29 erstreckt sich vorzugsweise parallel zur Außenseite des vorderen Schaftabschnitts 21b an der konkaven Rückenseite 21d. Hierdurch läßt sich der vorhandene Innenraum im Schaft 21 besonders günstig ausnutzen.

Dagegen erstreckt sich die Drehachse 13a des hinteren Wellenabschnitts 18a bzw. die Längsmittelachse der hinteren Aufnahmehülse 29 koaxial im hinteren Schaftabschnitt 21 a, der sich wenigstens in seinem vorderen Bereich mit gleicher Querschnittsgröße erstreckt. Unter Berücksichtigung der Abwinklung zwischen den Schaftabschnitten ergibt sich dabei eine Position für das vordere Ritzel 23a des hinteren Wellenabschnitts 18a, die bezüglich des hinteren Ritzels 23b des vorderen Wellenabschnitts 18b zur Bauchseite 21c hin versetzt ist. Die beiden Ritzel 23a, 23b kämmen somit an der Rückenseite des vorderen Ritzels 23a und der Bauchseite des hinteren Ritzels 23b der Wellenabschnitte 18a, 18b. Auch hierbei läßt sich der vorhandene Innenraum für die angestrebte Raumausnutzung dadurch ausnutzen, daß im Bereich des Abwinklungsscheitels das Aufnahmeloch 26 sich bis in den hinteren Endbereich des vorderen Schaftabschnitts 21b hinein erstreckt und im Abwinklungsbereich einen Freiraum 23c für die miteinander kämmenden Ritzel 23a, 23b bildet. An der Rückenseite ist das Aufnahmeloch 27 nach hinten bis in den Übergangsbereich des hinteren Schaftabschnitt 21a verlängert. Hierdurch wird ein Freiraum 27a geschaffen, durch den das Drehwerkzeug 55 geschoben werden kann.

Beim vorliegenden Ausführungsbeispiel besteht ein weiterer Konstruktionsparameter darin, daß der hintere Schaftabschnitt 21 a auf eine Länge L gekürzt werden kann, bei dem die koaxiale Zugänglichkeit zum vorderen Wellenabschnitt 18b bzw. zur vorderen Aufnahmehülse 29 gewährleistet ist. Dieses Kürzen erfolgt durch eine Demontage des Schafthülsenabschnitts 21h und der hinteren Aufnahmehülse 28. Bei dem soweit gekürzten Handstück 3 bzw. Schaft 21 gemäß Fig. 2 ist die Zugänglichkeit nicht nur des vorderen Wellenabschnitts 18 b bzw. der vorderen Aufnahmehülse 29, sondern auch des Drehwerkzeugs 55 aufgrund des Abstands a gewährleistet.

Die Zugänglichkeit läßt sich somit auch dadurch verbessern, daß der hintere Schaftabschnitt 21b gekürzt werden kann, so daß sich für den Rand 21e an der Bauchseite 21c eine bezüglich der Flucht mit der vorderen Aufnahmehülse 29 günstigere Position ergibt, in der die vordere Aufnahmehülse 29 oder das Drehwerkzeug 55 durch im wesentlichen koaxiales Bewegen von hinten montierbar oder demontierbar bzw. in Funktionsstellungbringbar und aus der Funktionsstellung entfernbar sind. Nach der Montage der vorderen Aufnahmehülse 20 kann der hintere Schaftabschnitt 21b wieder verlängert werden, was beim Ausführungsbeispiel durch den Einbau der hinteren Aufnahmehülse 28 erfolgt. Bereits hierdurch könnte die Verlängerung des hinteren Schaftabschnitts 21 a abgeschlossen sein, wobei der hintere Schaftabschnitt 21a sich bis zum hinteren Ende der montierten hinteren Aufnahmehülse 28 erstrecken kann.

Beim vorliegenden Ausführungsbeispiel ist zusätzlich der Hülsenschaftabschnitt 21h vorhanden, der für eine Verkürzung abgezogen und für eine Verlängerung wieder aufgeschoben wird. Zur axialen Positionierung des Hülsenschaftabschnitts 21h dient eine Schnellschlußverbindung, die beim Ausführungsbeispiel durch eine Rastverbindung 35 gebildet ist und ein schnelles und handhabungsfreundliches Abziehen und wieder Aufschieben des Hüllenschaftabschnitts 21h ermöglicht.

## Patentansprüche

1. Medizinisches, insbesondere dentalmedizinisches, Handstück (3),
mit einem Schaft (21), welcher aus einem vorderen und einem hinteren Schaftabschnitt (21a, 21b) besteht, die einen stumpfen Winkel (W1) miteinander einschließen,
mit einem Arbeitskopf (3a) am vorderen Ende des vorderen Schaftabschnitts (21b), der zum Arbeitskopf (3a) hin verjüngt ist,
und mit einer Antriebswelle (18) in dem Schaft (21), die aus einem vorderen und einem hinteren Wellenabschnitt (18a, 18b) besteht, welche miteinander in Antriebsverbindung stehen,
wobei sich der hintere Wellenabschnitt (18a) im hinteren Schaftabschnitt (21a) erstreckt und darin drehbar gelagert ist und wobei sich der vordere Wellenabschnitt (18b) im vorderen Schaftabschnitt (21b) erstreckt und darin drehbar gelagert ist,
wobei das vordere Ende des vorderen Wellenabschnitts (18b) mit einem im Arbeitskopf (3a) bewegbar gelagerten Werkzeughalter in Antriebsverbindung steht, und wobei der vordere Wellenabschnitt (18b) in einer Aufnahmehülse (29) gelagert ist,
**dadurch gekennzeichnet,**
**daß** die Aufnahmehülse (29) von hinten in den vorderen Schaftabschnitt (21b) einschraubbar ist, und daβ an der Aufnahmehülse (29) am hinteren Ende und von hinten zugänglich Drehangriffselemente (54) angeordnet sind, mit denen ein Drehwerkzeug formschlüssig verbindbar ist.

2. Handstück nach Anspru ch 1,
**dadurch gekennzeichnet,**
**daß** der vordere Wellen abschnitt (18b) so in dem Schaft (21) angeordnet ist, daß sein hinteres Ende näher an der durch die Abwinklung der beiden Schaftabschnitte (21a, 21b) gebildeten konkaven Rückenseite (21d) des Schaftes (21) liegt als an der konvexen Bauchseite (21c) derselben.

3. Handstück nach Anspru ch 1 oder 2,
**dadurch gekennzeichnet,**
**daß** die relevanten Konstruktionsparameter des Handstücks (3) so gewählt sind, daß die Aufnahmehülse (29) durch die Öffnung (21f) am Ende des hinteren Schaftabschnittes (21a) in den vorderen Schaftabschnitt (21b) mittels einer linearen Bewegung einschiebbar und dort verankerbar ist.

## Claims

1. A medical, in particular a dental, handpiece (3) having a shank (21) which consists of a forward and a rearward shank section (21a, 21b) which together enclose an obtuse angle (W1),
having a working head (3a) at the forward end of the forward shank section (21b), which tapers towards the working head (3a),
and having in the shank (21) a drive shaft (18) that consists of a forward and a rearward shaft section (18a, 18b) which are connected together in terms of drive,
wherein the rearward shaft section (18a) extends and is rotatably mounted in the rearward shank section (21a), and wherein the forward shaft section (18b) extends and is rotatably mounted in the forward shank section (21b),
wherein the forward end of the forward shaft section (18b) is connected in terms of drive to a tool holder that is movably mounted in the working head (3a), and wherein the forward shaft section (18b) is mounted in a receiving sleeve (29),
**characterised in that**
the receiving sleeve (29) can be screwed into the forward shank section (21b) from the rear, and **in that** arranged on the receiving sleeve (29), at the rearward end and so as to be accessible from the rear, there are rotary engagement elements (54) with which a rotary tool can be connected in a form-locking manner.

2. A handpiece according to claim 1,
**characterised in that**
the forward shaft section (18b) is arranged in the shank (21) in such a way that its rearward end lies closer to the concave rear side (21d) of the shank (21) formed by the angling of the two shank sections (21a, 21b) than to the convex bulge side (21c).

3. A handpiece according to claim 1 or 2,
**characterised in that**
the relevant construction parameters of the handpiece (3) are selected so that the receiving sleeve (29) can be pushed by means of a linear movement through the opening (21f) at the end of the rearward shank section (21a) into the forward shank section (21b) and can be anchored there.

## Revendications

1. Pièce à main (3) médicale, en particulier dentaire,
dotée d'une tige (21) qui est constituée d'une section de tige avant et d'une section de tige arrière (21 a, 21 b), lesquelles forment entre elles un angle obtus (W1),
dotée d'une tête de travail (3a) au niveau de l'extrémité avant de la section de tige avant (21 b), laquelle section de tige se rétrécit en direction de la tête de travail (3a),
et dotée d'un arbre d'entraînement (18) dans la tige (21), qui est constitué d'une section d'arbre avant et d'une section d'arbre arrière (18a, 18b), lesquelles se trouvent en liaison d'entraînement entre elles,
sachant que la section d'arbre arrière (18a) s'étend dans la section de tige arrière (21a) et est logée à l'intérieur de celle-ci de manière à pouvoir tourner, et sachant que la section d'arbre avant (18b) s'étend dans la section de tige avant (21 b) et est logée dans cette dernière de manière à pouvoir tourner,
sachant que l'extrémité avant de la section d'arbre avant (18b) se trouve en liaison d'entraînement avec un porte-outil logé de manière à pouvoir être déplacé dans la tête de travail (3a),
et sachant que la section d'arbre avant (18b) est logée dans un manchon de réception (29),
**caractérisée en ce**
**que** le manchon de réception (29) peut être vissé depuis l'arrière dans la section de tige avant (21 b), et en ce que des éléments d'attaque rotatifs (54) sont disposés au niveau du manchon de réception (29) sur l'extrémité arrière et sont accessibles depuis l'arrière, auxquels un outil rotatif peut être relié par complémentarité de forme.

2. Pièce à main selon la revendication 1,
**caractérisée en ce**
**que** la section d'arbre avant (18b) est disposée de telle manière dans la tige (21) que son extrémité arrière se trouve plus à proximité du côté arrière (21d) de la tige (21) concave formé par le coudage des deux sections de tige (21 a, 21b) que du côté inférieur (21c) convexe.

3. Pièce à main selon la revendication 1 ou 2,
**caractérisée en ce**
**que** les paramètres de construction de la pièce à main (3) importants sont choisis de telle sorte que le manchon de réception (29) peut être inséré par coulissement par l'ouverture (21f) au niveau de l'extrémité de la section de tige arrière (21a), dans la section de tige avant (21b) au moyen d'un mouvement linéaire et y être ancré.
